(19) Europäisches Patentamt

European Patent Office

Office européen des brevets

(11) **EP 4 675 553 A1**

(12) **EUROPEAN PATENT APPLICATION**
published in accordance with Art. 153(4) EPC

(43) Date of publication:
**07.01.2026 Bulletin 2026/02**

(21) Application number: **24763787.9**

(22) Date of filing: **22.02.2024**

(51) International Patent Classification (IPC):
*G06T 7/00* (2017.01)      *G06N 20/00* (2019.01)

(52) Cooperative Patent Classification (CPC):
**G06N 20/00; G06T 7/00**

(86) International application number:
**PCT/JP2024/006563**

(87) International publication number:
**WO 2024/181307 (06.09.2024 Gazette 2024/36)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.02.2023 JP 2023029570**

(71) Applicant: **Panasonic Intellectual Property
Management Co., Ltd.
Kadoma-shi, Osaka 571-0057 (JP)**

(72) Inventor: **NAKATSUKA Shunsuke
Kadoma-shi, Osaka 571-0057 (JP)**

(74) Representative: **Appelt, Christian W.
Boehmert & Boehmert
Anwaltspartnerschaft mbB
Pettenkoferstrasse 22
80336 München (DE)**

(54) **INFORMATION PROCESSING SYSTEM AND COMPUTER PROGRAM**

(57)    A class registration unit 32 receives registration of a plurality of classes each corresponding to a normal attribute or an abnormal attribute. A model generation unit 36 generates a function approximator by learning based on a plurality of training images each corresponding to one of the plurality of classes. An estimation unit 38 uses the function approximator to estimate a portion, in each of a plurality of evaluated images registered as capturing a normal subject or an abnormal subject, corresponding to each class. A determination unit 40 determines whether a subject in each evaluated image is normal or abnormal based on a result of synthesizing portions in each evaluated image meeting a class corresponding to an abnormal attribute. An evaluation unit 42 evaluates the function approximator based on whether each evaluated image is registered as capturing a normal subject or capturing an abnormal subject and on a result of determining whether the subject in each evaluated image is normal or abnormal.

FIG. 2

**Description**

TECHNICAL FIELD

The present disclosure relates to data processing technology and, in particular, to an information processing system and a computer program.

BACKGROUND ART

For example, deep learning is used in an image recognition process. Deep Learning is known as a methodology for machine learning that uses a multi-layered neural network, and, for example, a convolutional neural network is used in a multi-layer neural network. A convolutional neural network is formed by a multi-layered neural network that repeats convolution and pooling in a local area.
Furthermore, a structure of a fully convolutional neural network in which the fully connected layers constituting a convolutional neural network are configured as convolutional layers has been proposed (see, for example, Non-Patent Literature 1).

RELATED-ART LITERATURE

NON-PATENT LITERATURE

Non-Patent Literature 1:
Jonathan Long, Evan Shelhamer, Trevor Darrell, "Fully Convolutional Networks for Semantic Segmentation", The IEEE Conference on Computer Vision and Pattern Recognition (CVPR),

SUMMARY OF INVENTION

TECHNICAL PROBLEM

In recent years, an image recognition process by a function approximator created by machine learning is sometimes exploited for inspection of products manufactured in factories, etc. Important indicators for evaluating the accuracy of a function approximator include over detection rate and oversight rate. In classification by a function approximator, however, there is no distinction between normal and abnormal. It has therefore been difficult to calculate an over detection rate and an oversight rate in classification by a function approximator.

The present disclosure addresses the issue described above, and a purpose thereof is to provide a technology to support evaluation of the accuracy of classification by a function approximator.

SOLUTION TO PROBLEM

An information processing system according to an embodiment includes:
a reception unit that receives registration of a plurality of classes each corresponding to a normal attribute or an abnormal attribute; a model generation unit that generates a function approximator by learning based on a plurality of training images each corresponding to one of the plurality of classes; an estimation unit that uses the function approximator to estimate a portion, in each of a plurality of evaluated images registered as capturing a normal subject or an abnormal subject, corresponding to each class; a determination unit that determines whether a subject in each evaluated image is normal or abnormal based on a result of synthesizing portions in each evaluated image meeting a class corresponding to an abnormal attribute; and an evaluation unit that evaluates the function approximator based on whether each evaluated image is registered as capturing a normal subject or capturing an abnormal subject and on a result of determining whether the subject in each evaluated image is normal or abnormal.

Optional combinations of the aforementioned constituting elements, and implementations of the embodiment in the form of apparatuses, methods, computer programs, and recording mediums recording computer programs may also be practiced as additional modes of the present disclosure.

ADVANTAGEOUS EFFECTS OF INVENTION

According to the technology of the present disclosure, it is possible to support evaluation of the accuracy of classification by a function approximator.

BRIEF DESCRIPTION OF DRAWINGS

[Fig. 1] Fig. 1 shows a configuration of the information processing system of the embodiment.
[Fig. 2] Fig. 2 is a block diagram showing functional blocks of the AI processing apparatus of Fig. 1.
[Fig. 3] Fig. 3 is a flowchart showing the operation of the AI processing apparatus of Fig. 1.
[Fig. 4] Fig. 4 shows an example of the image registration screen.
[Fig. 5] Fig. 5 shows an example of the class management screen.
[Fig. 6] Fig. 6A shows an example of the evaluated image, and Figs. 6B-6F show examples of response maps.
[Fig. 7] Fig. 7 shows an example of the NG response map.
[Fig. 8] Fig. 8 shows an NG response map resulting from binarizing the NG response map of Fig. 7.
[Fig. 9] Fig. 9 shows an NG response map resulting from subjecting the NG response map of Fig. 8 to area filtering.
[Fig. 10] Fig. 11 shows an example of the evaluation screen.
[Fig. 11] Fig. 11 shows an example of the binarization threshold value graph.
[Fig. 12] Fig. 12 shows an example of the area threshold value graph.

DESCRIPTION OF EMBODIMENTS

The apparatus or the entity that executes the method according to the disclosure is provided with a computer. By causing the computer to run a program, the function of the apparatus or the entity that executes the method according to the disclosure is realized. The computer is comprised of a processor that operates in accordance with the program as a main hardware feature. The disclosure is non-limiting as to the type of the processor so long as the function is realized by running the program. The processor is comprised of one or a plurality of electronic circuits including a semiconductor integrated circuit (IC) or a large-scale integration (LSI). The terms IC and LSI may change depending on the level of integration, and the processor may be comprised of a system LSI, a Very Large Scale Integration (VLSI), or an Ultra Large Scale Integration (ULSI). A field programmable gate array (FPGA), which is programmed after an LSI is manufactured, or a reconfigurable logic device, in which connections inside the LSI can be reconfigured or circuit compartments inside the LSI can be set up, can be used for the same purpose. The plurality of electronic circuits may be integrated in one chip or provided in a plurality of chips. The plurality of chips may be aggregated in one apparatus or provided in a plurality of apparatuses. The program may be recorded in a computer-readable non-transitory recording medium such as a read only memory (ROM), an optical disk, and a hard disk drive or recorded in a computer-readable transitory storage medium such as a random access memory (RAM). The program may be stored in a recording medium in advance or supplied to a recording medium or a storage medium via wide area communication network including the Internet.

An outline of the technology of the embodiment will be described. In recent years, an image recognition process by a function approximator created by machine learning is sometimes used for inspection of products manufactured in factories, etc. A function approximator can be said to be a mathematical model or an AI model and is referred to as an inspection AI in the embodiment. An over detection rate and an oversight rate are important indicators for determining the accuracy of an inspection AI. An over detection rate is a rate at which a subject in an image is detected as being abnormal, when in fact it is normal. If the over detection rate is high, the yield of the product will be poor. An oversight rate is a rate at which a subject in a image cannot be detected as being abnormal when in fact it is abnormal, i.e., a subject that is in fact abnormal is detected as being normal. A high oversight rate increases the likelihood that defective products will be sent to the market.

For calculation of an over detection rate and an oversight rate, it is necessary to categorize the results of classification by an inspection AI into either normal or abnormal. In classification by an inspection AI, however, there is no distinction between normal and abnormal. Therefore, it has been difficult to calculate an over detection rate and an oversight rate in classification by an inspection AI. In particular, it has been difficult to calculate an over detection rate and an oversight rate in classification into three or more classes. The information processing system of the embodiment addresses this by assigning a normal attribute or an abnormal attribute as an attribute of each of a plurality of classes (also referred to as "determination categories") that are candidate categories in classification by an inspection AI. This makes it possible to calculate an over detection rate and an oversight rate related to the inspection AI.

A normal attribute means a class that is detected from a target of inspection (e.g., a subject in an image) when the subject is normal. An abnormal attribute (i.e., an anomaly attribute) means a class that is detected from a target of inspection (e.g., a subject in an image) when the subject is abnormal. Hereinafter, the normal attribute is also referred to as the "OK category", and the abnormal attribute is also referred to as "NG (No Good) category".

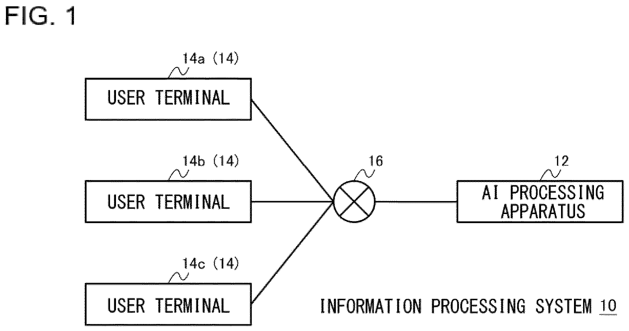

Details of the technology of the embodiment will be described. Fig. 1 shows a configuration of the information processing system 10 of the embodiment. The information processing system 10 includes an AI processing apparatus 12 and a plurality of user terminals 14. The apparatuses shown in Fig. 1 are connected via a communication network 16 including a LAN, WAN, the Internet, etc.

The AI processing apparatus 12 is an information processing apparatus that executes a process related to generation and evaluation of an inspection AI. The AI processing apparatus 12 of the embodiment is a cloud server that provides a data processing service as a cloud service.

The plurality of user terminals 14 are information processing apparatus controlled by a plurality of users who use the service of the AI processing apparatus 12. For example, the user terminal 14 is an information processing apparatus controlled by the developer of an inspection system that uses an inspection AI. The plurality of user terminals 14 include a user terminal 14a, a user terminal 14b, and a user terminal 14c controlled by different users. The user terminal 14 may be a PC, a tablet terminal, or a smartphone.

In an embodiment, the AI processing apparatus 12 has the function of a web server. The AI processing apparatus 12 provides web content (HTML data, etc.) related to the development and evaluation of the inspection AI to the user terminal 14. The user terminal 14 accesses the AI processing apparatus 12 via a web browser. Further, the user terminal 14 displays the web content (for example, the AI management screen described later) provided by the AI processing apparatus 12 on a predetermined display.

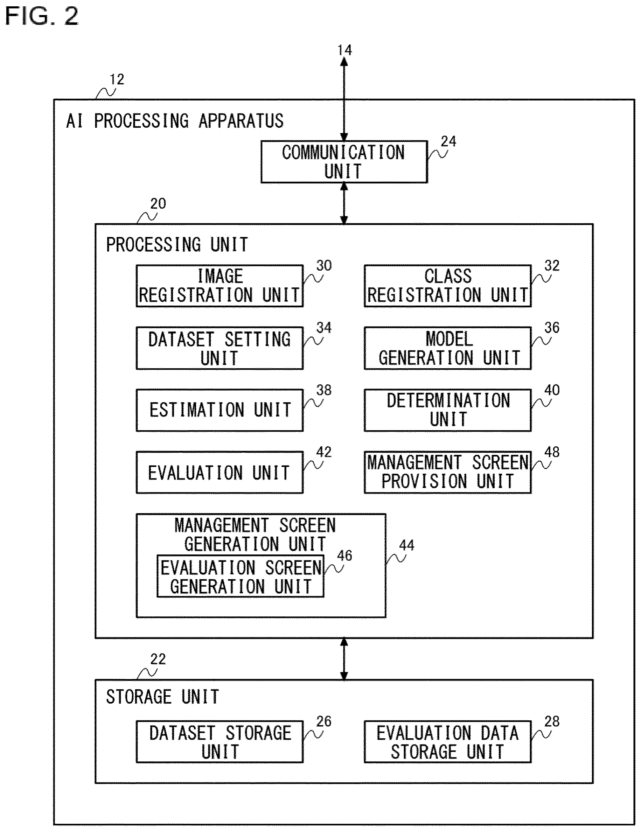

Fig. 2 is a block diagram showing functional blocks of the AI processing apparatus 12 of Fig. 1. The blocks shown in the block diagrams of the present disclosure are implemented in hardware such as devices and mechanical apparatus exemplified by a CPU and a memory of a computer, and in software such as a computer program. Fig. 1 depicts functional blocks implemented by the cooperation of those. It will be understood by those skilled in the art that these functional blocks are implemented in a variety of manners by a combination of hardware and software.

The AI processing apparatus 12 includes a processing unit 20, a storage unit 22, and a communication unit 24. The processing unit 20 executes various data processes related to the development and evaluation of the inspection AI. The storage unit 22 stores data referenced or updated by the processing unit 20. The communication unit 24 communicates with an external apparatus according to a predetermined communication protocol. The processing unit 20 transmits and receives data to and from the user terminal 14 via the communication unit 24.

The storage unit 22 includes a dataset storage unit 26 and an evaluation data storage unit 28. The dataset storage unit 26 stores various data related to the inspection AI. Specifically, the dataset storage unit 26 includes (1) an ID of a dataset, (2) a training dataset (including a plurality of training images in the embodiment), (3) an evaluation dataset (including a plurality of evaluated images in the embodiment), (4) information on a class in classification, and (5) model data for the inspection AI (e.g., a file in which a model is stored, etc.).

The evaluation data storage unit 28 stores data related to the evaluation of the inspection AI. Specifically, the evaluation data storage unit 28 stores information related to the correctness of classification of the evaluation dataset by the inspection AI and an evaluation index value related to the accuracy of classification by the inspection AI (including an over detection rate and an oversight rate in the embodiment).

The processing unit 20 includes an image registration unit 30, a class registration unit 32, a dataset setting unit 34, a model generation unit 36, an estimation unit 38, a determination unit 40, an evaluation unit 42, a management screen generation unit 44, and a management screen provision unit 48. The management screen generation unit 44 includes an evaluation screen generation unit 46.

The functions of the plurality of function blocks of the processing unit 20 may be implemented in a computer program (in this case, referred to as "AI management program"). The AI management program may be stored in a non-temporary recording medium and installed in the storage of the AI processing apparatus 12 via the recording medium. Further, the AI management program may be downloaded via the network and installed in the storage of the AI processing apparatus 12. The processor (CPU, etc.) of the AI processing apparatus 12 may exhibit the functions of the plurality of functional blocks of the processing unit 20 by reading the AI management program into the main memory and executing the program.

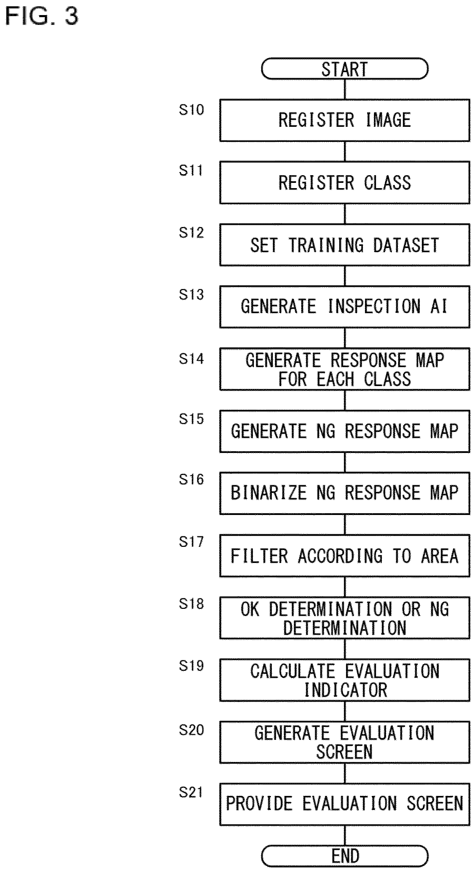

Fig. 3 is a flowchart showing the operation of the AI processing apparatus 12 of Fig. 1. The operation of the information processing system 10 will now be described with reference to Fig. 3. In the following description, the web content as a user interface provided by the AI processing apparatus 12 to the user terminal 14 is collectively referred to as the "AI management screen". The AI management screen includes an image registration screen, a class management screen, and an evaluation screen, which will be described later.

The user terminal 14 accesses the AI processing apparatus 12 via a web browser in response to a user operation. The management screen generation unit 44 of the AI processing apparatus 12 generates various AI management screens. The management screen provision unit 48 of the AI processing apparatus 12 transmits data for the AI management screen to the user terminal 14. The user terminal 14 displays the AI management screen on a predetermined display.

In connection with S10 in Fig. 3, the management screen provision unit 48 of the AI processing apparatus 12 transmits the data for the image registration screen to the user terminal 14 in response to a request from the user terminal 14. The user terminal 14 displays the image registration screen on a predetermined display.

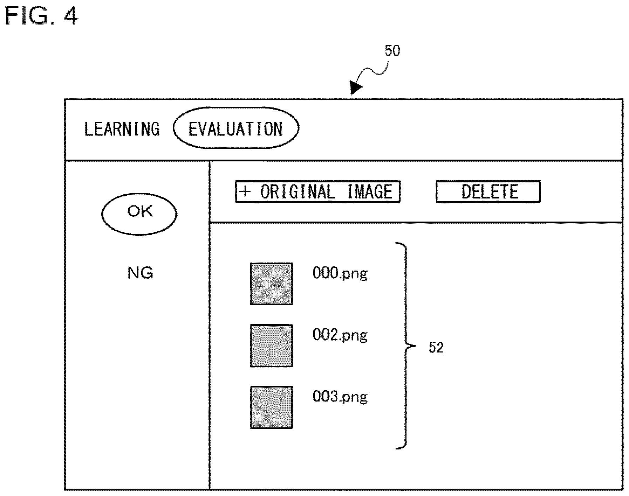

Fig. 4 shows an example of the image registration screen. The image registration screen 50 is configured to register images in three categories including:

a training image, an evaluated image in the OK category, and an evaluated image in the NG category. The training image is an image for training the inspection AI (i.e., causing the inspection AI to learn the image). The evaluated image in the OK category is an image that captures a normal subject, i.e., an image for which the inspection AI should determine that the subject is normal. The evaluation image in the NG category is an image that captures an abnormal subject, i.e., an image for which the inspection AI should determine that the subject is abnormal. The abnormal subject may be, for example, a product having a scratch, a stain, a dent, etc., or a product in which a foreign substance is present.

The user registers each of the plurality of evaluated images either in the OK category or in the NG category. Fig. 4 shows the image registration screen 50 in which a plurality of evaluated images 52 in the OK category are registered. Hereinafter, the evaluated image in the OK category is also referred to as an "OK evaluated image", and the evaluated image in the NG category is also referred to as an "NG evaluated image".

The user terminal 14 transmits the data for the training image, the OK evaluated image, and the NG evaluated image input by the user in the image registration screen 50 to the AI processing apparatus 12. The image registration unit 30 of the AI processing apparatus 12 receives data for the training image, the OK evaluated image, and the NG evaluated image transmitted from the user terminal 14. The image registration unit 30 stores the data for these images in the dataset storage unit 26 in association with the ID of the dataset designated by the user.

In connection with S11 in Fig. 3, the management screen provision unit 48 of the AI processing apparatus 12 transmits the data for the class management screen to the user terminal 14 in response to a request from the user terminal 14. The user terminal 14 displays the class management screen on a predetermined display.

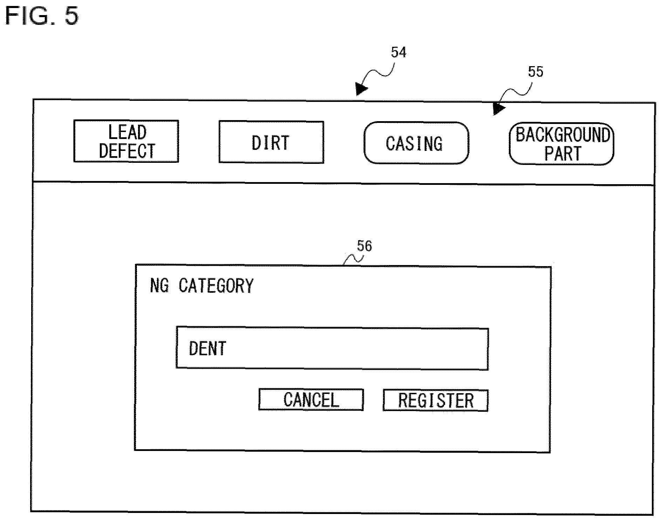

Fig. 5 shows an example of the class management screen. The class management screen 54 includes a class area 55. In the class area 55, registered classes are displayed in an array. In Fig. 5, the classes enclosed by an ordinary rectangle (lead defect and dirt) are classes in the NG category, and the classes enclosed by a rounded square (casing and background part) are classes in the OK category. In the class area 55, the icon indicating a class in the NG category and the icon indicating a class in the OK category may be marked with mutually different colors. For example, the icon indicating a class in the NG category may be marked red, while the icon indicating a class in the OK category may be marked green.

Further, the class registration window 56 is displayed in the class management screen 54. In the class registration window 56, a new class can be registered in association with either the OK category or the NG category. Fig. 5 shows that a new class "dent" belonging to the NG category is registered.

The user terminal 14 transmits novel class information (class name and attribute information (OK category or NG category)) input in the class registration window 56 to the AI processing apparatus 12. The class registration unit 32 of the AI processing apparatus 12 receives, as a reception unit, registration of a plurality of classes corresponding to the normal attribute or the abnormal attribute. In the embodiment, the class registration unit 32 stores the novel class information transmitted from the user terminal 14 in the dataset storage unit 26.

In connection with S12 in Fig. 3, the management screen provision unit 48 of the AI processing apparatus 12 transmits a dataset setting screen (not shown) for extracting a dataset (hereinafter also referred to as "training dataset") from the training image registered in S10 to the user terminal 14. A training dataset can be said to be a plurality of images clipped from the training image. The user terminal 14 causes a predetermined display to display the dataset setting screen. The user clips the training dataset from the training image in the dataset setting screen and associates the training dataset thus clipped with one of the plurality of classes registered.

The user terminal 14 transmits the training dataset corresponding to one of the plurality of classes set in the dataset setting screen to the AI processing apparatus 12. The dataset setting unit 34 of the AI processing apparatus 12 receives the training dataset transmitted from the user terminal 14 and stores the dataset in the dataset storage unit 26. In practice, the training dataset corresponding to each of the plurality of classes registered is uploaded from the user terminal 14 to the AI processing apparatus 12 and is and registered therein.

In connection with S13 in Fig. 3, the user terminal 14 transmits data requesting generation of an inspection AI to the AI processing apparatus 12 in response to a user operation in the AI management screen. The data requesting generation of an inspection AI includes designation of the training dataset used in generation of the inspection AI and the evaluation dataset used in evaluation of the inspection AI.

The model generation unit 36 of the AI processing apparatus 12 generates an inspection AI as a function approximator by machine learning based on the training dataset designated in the request from the user terminal 14. The inspection AI may be a fully convolutional neural network or may be a mathematical model (decision tree, etc.) of a type different from a neural network. The model generation unit 36 stores the model data for the generated inspection AI in the dataset storage unit 26 in association with the dataset used in generation of the inspection AI.

In connection with S14 in Fig. 3, the estimation unit 38 of the AI processing apparatus 12 uses the inspection AI to estimate a portion, in each of the plurality of evaluated images registered as capturing a normal subject or an abnormal subject (OK evaluated images and NG evaluated images), corresponding to each class. Specifically, the estimation unit 38 generates, for each of the plurality of evaluated images (OK evaluated images and NG evaluated images), a plurality of response maps indicating the degree of response to each class.

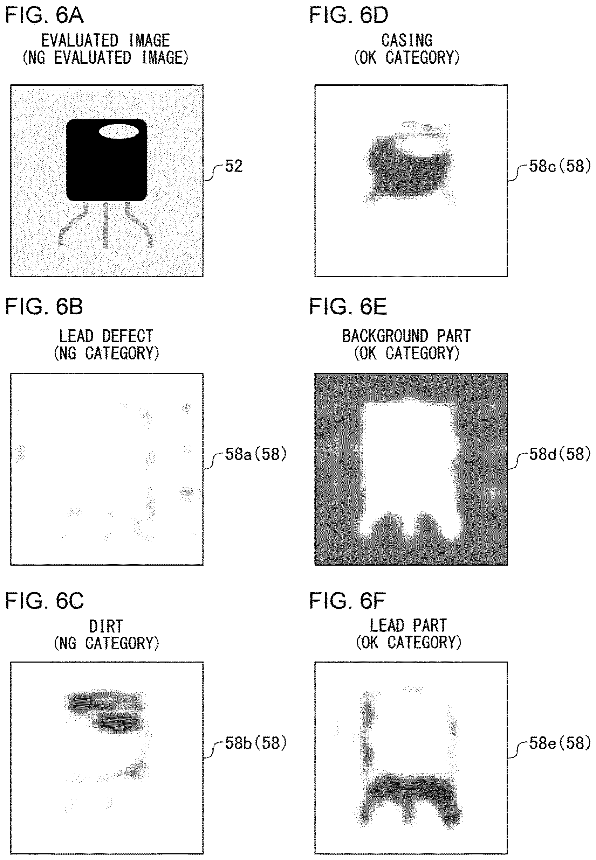

Fig. 6A shows an example of the evaluated image 52 (in this case, an NG evaluated image). Figs. 6B-6F show examples of response maps. Fig. 6B shows a response map 58a related to the class "defective lead" in the NG category. Fig. 6C shows a response map 58b related to the class "dirt" in the NG category. Fig. 6D shows a response map 58c related to the class "casing" in the OK category. Fig. 6E shows a response map 58d related to the class "background part" in the OK category. Fig. 6F shows a response map 58e related to the class "lead part" in the OK category. A general term for the response map 58a-response map 58e is the response map 58.

Each region in the response map 58 is painted in 256 levels of 0-255 according to the value of probability of meeting the class. 0 represents the smallest value of probability of meeting the class, and 255 represents the largest value of probability of meeting the class. The response map 58 includes a value, for each region in the evaluated image 52, indicating the degree of response to each class. In other words, the response map related to a particular class includes a value (also called a response value), for each region in the evaluated image 52, indicating the degree of response to the class. The response value is 0 when the degree of response is lowest and is 255 when the degree of response is highest.

A publicly known method may be employed to generate a response map related to each class. For example, the estimation unit 38 may input the evaluated image 52 to the inspection AI as a fully convolutional neural network. In this case, the estimation unit 38 may acquire, as output data from the inspection AI, a plurality of response maps 58 (feature maps) related to the evaluated image 52, i.e., a plurality of response maps 58 related to a plurality of classes. In another example, the estimation unit 38 may acquire a probability value, for each region in the evaluated image 52, corresponding to each class from the inspection AI. In this case, the estimation unit 38 may generate a plurality of response maps 58 related to a plurality of classes by painting each region in the response map 58 related to a given class according to the region-by-region probability value for the class.

In connection with S15 in Fig. 3, the determination unit 40 of the AI processing apparatus 12 determines whether the subject in each evaluated image is normal or abnormal based on a result of synthesizing portions in each evaluated image meeting a class corresponding to an abnormal attribute. In an embodiment, the determination unit 40 synthesizes a plurality of response maps related to a plurality of classes belonging to the NG category. The response map after synthesis is alternatively called the "NG response map".

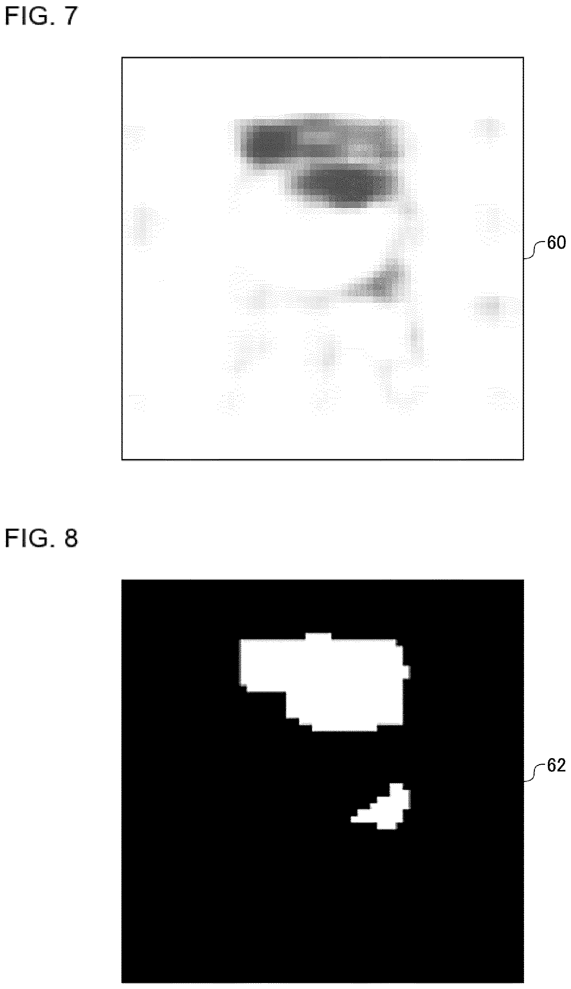

When the response map 58a-response map 58e shown in Figs. 6B-6F are generated by the estimation unit 38, for example, the determination unit 40 generates an NG response map derived from synthesizing the response map 58a and the response map 58b related to the NG category class. Fig. 7 shows an example of the NG response map. The NG response map 60 of Fig. 7 is derived from synthesizing the response map 58a of Fig. 6B and the response map 58b of Fig. 6C. The value of each region in the NG response map is, for example, 0-255.

In connection with S16 in Fig. 3, the determination unit 40 uses a predetermined threshold value for binarization (hereinafter also referred to as "binarization threshold value") to binarize the value of each region in the NG response map to 0 or 1. Specifically, the determination unit 40 converts the value of a given region in the NG response map to 1 when the value is equal to or greater than the binarization threshold value and converts the value of a given region to 0 when the value is less than the binarization threshold value.

Fig. 8 shows an NG response map 62 resulting from binarizing the NG response map 60 of Fig. 7. The region shown in white in the NG response map 62 of Fig. 8 is a region with a value of 1, i.e., a region with a relatively high degree of meeting the class of the NG category. The region shown in black in the NG response map 62 of Fig. 8 is a region with a value of 0, i.e., an area with a relatively low degree of meeting the class of the NG category.

In connection with S17 and S18 in Fig. 3, the determination unit 40 determines whether the object captured in each evaluated image is normal based on the size of the region meeting a class indicated by the NG response map. The determination unit 40 identifies a region in which the degree of response (response value) is equal to or greater than a predetermined threshold value in the NG response map as the region meeting a class described above. The determination unit 40 determines that an object captured in the evaluated image is abnormal when the area of the region meeting a class indicated by the NG response map is equal to or greater than a predetermined threshold value (hereinafter also referred to as "area threshold value").

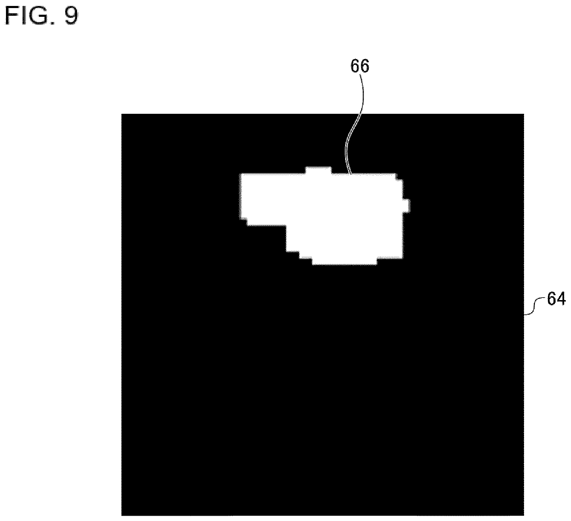

In connection with S17 of Fig. 3, the determination unit 40 according to the embodiment filters the region of the value "1" in the binarized NG response map according to a predetermined area threshold value. Specifically, the determination unit 40 measures the size of a region, in the binarized NG response map, in which the value "1" continues. When the size of the region in which the value "1" continues is equal to or greater than the area threshold value, the determination unit 40 detects the area as a blob (white mass). When the size of the region in which the value "1" continues is less than the area threshold value, on the other hand, the determination unit 40 does not detect the region as a blob. Fig. 9 shows an NG response map 64 resulting from subjecting the NG response map 62 of Fig. 8 to area filtering. In the NG response map 64 of Fig. 9, a blob 66 is detected.

Further, in connection with S18 in Fig. 3, when the determination unit 40 detects at least one blob from the binarized NG response map, the determination unit 40 determines that the object captured in the evaluated image 52 originating the NG response map is abnormal. This determination will also be called "NG determination". When no blobs are detected from the binarized NG response map, on the other hand, the object captured in the evaluated image 52 originating the NG response map is determined to be normal. This determination will also be called an "OK determination". The determination unit 40 stores determination result information indicating OK determination or NG determination in the dataset storage unit 26 in association with each of the plurality of evaluated images stored in the dataset storage unit 26.

In the embodiment, the binarization threshold value and the area threshold value are determined and set by the user. The user may adjust these thresholds values based on the user's own knowledge or an experiment using the information processing system 10. Provision of information to support the setting of the binarization threshold value and the area threshold value will be described later.

In connection with S19 in Fig. 3, the evaluation unit 42 of the AI processing apparatus 12 evaluates the inspection model and derives an evaluation index value (over detection rate and oversight rate in the embodiment) related to the performance of the inspection model. Specifically, the evaluation unit 42 evaluates the inspection AI based on (1) whether each of the plurality of evaluated images 52 is registered as capturing a normal subject or an abnormal subject, and (2) a determination result on whether the subject in each evaluated image 52 is normal or abnormal. (1) above can be said to relate to whether each evaluated image 52 is either an OK evaluated image or an NG evaluated image. (2) above can be said to relate to whether an OK determination or an NG determination is made for each evaluated image 52. Correctly, the OK evaluated image should yield an OK determination, and the NG evaluated image should yield an NG determination.

In the embodiment, the evaluation unit 42 counts the number of times an OK determination is made for the OK evaluated image, the number of times an NG determination is made for the OK evaluated image, the number of times an OK determination is made for the NG evaluated image, and the number of times an NG determination is made for the NG evaluated image. As an evaluation process on the inspection AI, the evaluation unit 42 calculates the over detection rate and the oversight rate related to the inspection AI based on the above counts. The evaluation unit 42 stores the over detection rate and the oversight rate related to the inspection AI in the evaluation data storage unit 28 in association with the ID of the inspection AI to be evaluated (e.g., the dataset ID in the dataset storage unit 26).

The formula for calculating the over detection rate and the oversight rate will be shown.

$$\text{Over detection rate} = fp/(tn+fp)$$

$$\text{Oversight rate} = fn/(tp+fn)$$

tn (true negative): number of OK evaluated images for which the inspection AI made an OK determination
fn (false negative): number of NG evaluated images for which the inspection AI made an OK determination
tp (true positive): number of NG evaluated images for which the inspection AI made an NG determination
fp (false positive): number of OK evaluated images for which the inspection AI made an NG determination
fn denotes the number of times the inspection AI oversaw NG. Further, fp denotes the number of times the inspection AI mistakenly detected NG.

In connection with S20 in Fig. 3, the user terminal 14 transmits data requesting an evaluation screen related to a particular inspection AI to the AI processing apparatus 12 in response to a user operation. The evaluation screen generation unit 46 of the AI processing apparatus 12 reads the evaluation result related to the inspection AI designated in the user terminal 14 from the evaluation data storage unit 28 and generates an evaluation screen indicating the evaluation result. The evaluation result related to the inspection AI includes the over detection rate and the oversight rate. In connection with S21 in Fig. 3, the management screen provision unit 48 of the AI processing apparatus 12 transmits data for the evaluation screen generated in S20 to the user terminal 14. The user terminal 14 displays the evaluation screen on a predetermined display.

In the embodiment, the evaluation screen generation unit 46 generates the evaluation screen including an evaluated image classification result. The evaluated image classification result distinguishes between the first evaluated image, i.e., an OK evaluated image for which an OK determination is made, the second evaluated image, i.e., an OK evaluated image for which an NG determination is made (i.e., an over-detected OK evaluated image), the third evaluated image, i.e., an NG evaluated image for which an NG determination is made, and the fourth evaluated image, i.e., an NG evaluated image for which an OK determination is made (i.e., an overlooked NG evaluated image).

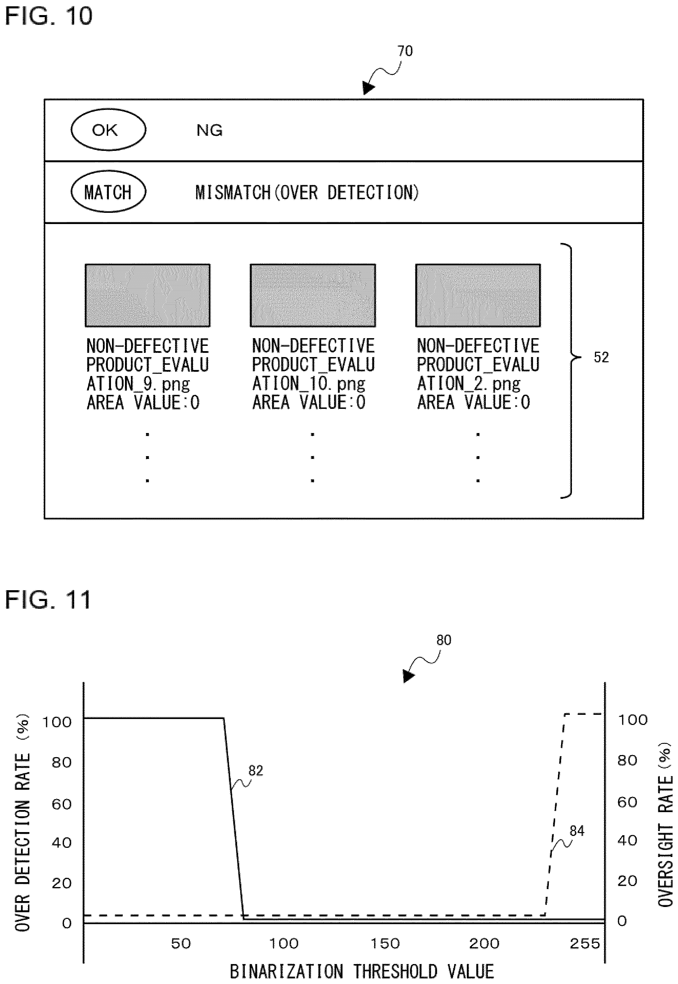

Fig. 10 shows an example of the evaluation screen. The evaluation screen 70 includes an evaluated image classification result. In the evaluation screen 70 of Fig. 10, "OK" and "match" are selected. In Fig. 10, therefore, a list of OK evaluated images for which an OK determination is made are shown as the evaluated image classification result. The evaluation screen generation unit 46 sets an image file name and a blob area value on the evaluation screen 70 along with the OK evaluated image.

When "OK" and "mismatch" are selected in the evaluation screen 70, a list of OK evaluated image for which an NG determination is made are shown. That is, a list of OK evaluated images over-detected by the inspection AI are shown.

When "NG" and "mismatch" are selected in the evaluation screen 70, a list of NG evaluated images for which an OK determination is made are shown. That is, a list of NG evaluated images overlooked by the inspection AI are shown.

In further accordance with the embodiment, the determination unit 40 of the AI processing apparatus 12 identifies a region meeting a class in the response map corresponding to each evaluated image multiple times and determines whether the subject captured in each evaluated image is normal or abnormal multiple times, changing the binarization threshold value. That is, the determination unit 40 makes an OK determination or an NG determination for each binary threshold value and for each evaluated image. The evaluation unit 42 evaluates the inspection AI multiple times using a plurality of results of determination by the determination unit 40. That is, the evaluation unit 42 calculates an over detection rate and an oversight rate related to the inspection AI for each binarization threshold value. The evaluation unit 42 stores a set of the over detection rate and the oversight rate for each binarization threshold value in the evaluation data storage unit 28. The evaluation screen generation unit 46 refers to the evaluation data storage unit 28 and generates an evaluation screen 70 including a binary threshold value graph that shows a plurality of binarization threshold values and a plurality of evaluation results in association with each other.

Fig. 11 shows an example of the binarization threshold value graph. The binarization threshold value graph 80 includes an over detection rate graph 82 indicated by a solid line and an oversight rate graph 84 indicated by a dashed line. In the over detection rate graph 82, the horizontal axis represents the binarization threshold value, and the vertical axis represents the over detection rate. The over detection rate graph 82 shows the transition of the over detection rate in association with the change in the binarization threshold value. In the oversight rate graph 84, the horizontal axis represents the binarization threshold and the vertical axis represents the oversight rate. The oversight rate graph 84 shows the transition of the oversight rate in association with the change in the binarization threshold value. Presenting the over detection rate graph 82 and the oversight rate graph 84 to the user assists the user to set an appropriate binarization threshold value. In the example of Fig. 11, the user can determine that the binarization threshold value should be set between 80-230, where both the over detection rate and the oversight rate are 0.

In the embodiment, the determination unit 40 also determines whether the subject captured in each evaluated image is normal or abnormal multiple times, changing the area threshold value. That is, the determination unit 40 performs an OK determination or an NG determination for each area threshold value and for each evaluated image. The evaluation unit 42 evaluates the inspection AI multiple times using the plurality of results of determination by the determination unit 40. That is, the evaluation unit 42 calculates an over detection rate and an oversight rate related to the inspection AI for each area threshold value. The evaluation unit 42 stores a set of the over detection rate and the oversight rate for each area threshold value in the evaluation data storage unit 28. The evaluation screen generation unit 46 refers to the evaluation data storage unit 28 and generates the evaluation screen 70 including an area threshold value graph that shows a plurality of area threshold values and a plurality of evaluation results in association with each other.

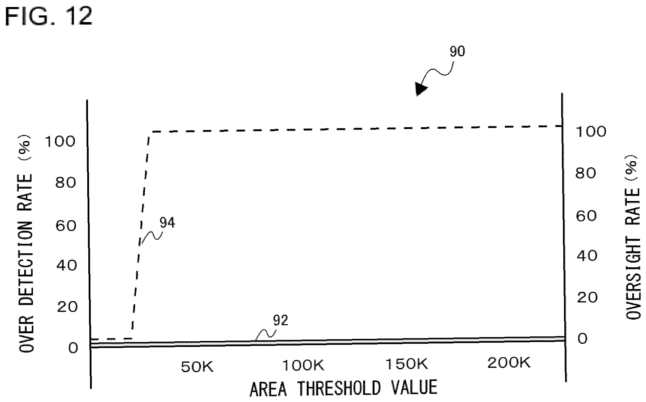

Fig. 12 shows an example of the area threshold value graph. The area threshold value graph 90 includes an over detection rate graph 92 indicated by a solid line and the oversight rate graph 94 indicated by a dashed line. In the over detection rate graph 92, the horizontal axis represents the area threshold value and the vertical axis represents the over detection rate. The over detection rate graph 92 shows the transition of the over detection rate in association with the change in the area threshold value. In the oversight rate graph 94, the horizontal axis represents the area threshold value and the vertical axis represents the oversight rate. The oversight rate graph 94 shows the transition of the oversight rate in association with the change in the area threshold value. Presenting the over detection rate graph 92 and the oversight rate graph 94 to the user assists the user to set an appropriate area threshold value. In the example of Fig. 12, the user can determine that the area threshold value should be set between 0-20, where both the over detection rate and the oversight rate are 0.

According to the information processing system 10 of the embodiment, it is possible to obtain information on the over detection rate and the oversight rate related to the inspection AI by assigning a normal attribute or an abnormal attribute to each of the classes in classification by the inspection AI. As a result, it is possible to support evaluation of the accuracy of classification by the inspection AI. In further accordance with the information processing system 10, the result of classification by the inspection AI can be presented in an easy-to-understand manner by providing an evaluation screen that includes the evaluated image classification result.

In still further accordance with the information processing system 10, setting of an appropriate threshold value can be supported by providing an evaluation screen that includes the binarization threshold value graph 80 and the area threshold value graph 90. The technology disclosed in the embodiment can be applicable not only to the inspection AI but to AI models for various applications created by machine learning.

Given above is a description based on the embodiment. The embodiment is intended to be illustrative only and it will be understood by those skilled in the art that various modifications to combinations of constituting elements and processes of the embodiment are possible and that such modifications are also within the scope of the present disclosure.

The AI processing apparatus 12 of the above embodiment is assumed to be a cloud server. In one variation, the AI processing apparatus 12 may be an on-premises server. Further, the functions of the AI processing apparatus 12 of the embodiment may be distributed for implementation in a plurality of information processing apparatuses. In this case, the plurality of information processing apparatuses may communicate with each other and cooperate as a system to perform the same process as that of the AI processing apparatus 12 of the embodiment. Further, at least some of the functions of the AI processing apparatus 12 of the embodiment may be implemented in an application that runs on the user terminal 14.

Any combination of the embodiment and the variation described above will also be useful as an embodiment of the present disclosure. New embodiments created by the combination provide the advantages of embodiment and the variation combined. It will also be understood by skilled persons that the functions that the constituting elements recited in the claims should achieve are implemented either alone or in combination by the constituting elements shown in the embodiment and the variation.

<Additional note>

The following technologies are disclosed in the above description of the embodiment and the variation.

[Technology 1]

An information processing system including:

a reception unit that receives registration of a plurality of classes each corresponding to a normal attribute or an abnormal attribute;
a model generation unit that generates a function approximator by learning based on a plurality of training images each corresponding to one of the plurality of classes;
an estimation unit that uses the function approximator to estimate a portion, in each of a plurality of evaluated images registered as capturing a normal subject or an abnormal subject, corresponding to each class;
a determination unit that determines whether a subject in each evaluated image is normal or abnormal based on a result of synthesizing portions in each evaluated image meeting a class corresponding to an abnormal attribute; and
an evaluation unit that evaluates the function approximator based on whether each evaluated image is registered as capturing a normal subject or capturing an abnormal subject and on a result of determining whether the subject in each evaluated image is normal or abnormal.

According to this information processing system, evaluation of the accuracy of classification by a function approximator can be supported.

[Technology 2]

The information processing system according to Technology 1,
wherein the evaluation unit calculates at least one of an over detection rate or an oversight rate related to the function approximator.
According to this information processing system, evaluation of a function approximator can be supported by using at least one of an over detection rate or an oversight rate, which are important indicators for evaluating the accuracy of classification by a function approximator.

[Technology 3]

The information processing system according to Technology 1 or 2, further including:
an evaluation screen generation unit that generates an evaluation screen that shows, in distinction from one other, a first evaluated image which is registered as capturing a normal subject and for which the subject is determined to be normal, a second evaluated image which is registered as capturing a normal subject and for which the subject is determined to be abnormal, a third evaluated image which is registered as capturing an abnormal subject and for which the subject is determined to be abnormal, and a fourth evaluated image which is registered as capturing an abnormal subject and for which the subject is determined to be normal.
According to this information processing system, it is possible to present each of an evaluated image for which a determination on normal or abnormal is properly made by a function approximator, an image in which an abnormality is detected in error, and an image in which an abnormality is oversighted to the user in an easy-to-understand manner.

[Technology 4]

The information processing system according to Technology 1 or 2,

wherein the estimation unit generates, for each of the plurality of evaluated images, a plurality of response maps indicating a degree of response to each class, and

wherein the determination unit synthesizes a plurality of response maps related to a class corresponding to an abnormal attribute and determines whether an object captured in each evaluated image is normal or abnormal based on a size of a region meeting a class indicated by a synthesized response map.

According to this information processing system, it is possible to efficiently determine whether an object captured in each evaluated image is normal or abnormal.

[Technology 5]

The information processing system according to Technology 4, further including:

an evaluation screen generation unit,

wherein the response map includes a value indicating a degree of response to each class for each region in each evaluated image,

wherein the determination unit identifies a region in which the degree of response is equal to or greater than a predetermined threshold value in the response map as a region meeting a class,

wherein the determination unit identifies the region meeting a class in the response map corresponding to each evaluated image multiple times and determines whether the subject captured in each evaluated image is normal or abnormal multiple times, changing the threshold value,

wherein the evaluation unit evaluates the function approximator multiple times by using results of multiple determinations by the determination unit, and

wherein the evaluation screen generation unit generates an evaluation screen that shows a plurality of threshold values and a plurality of evaluation results in association with each other.

According to this information processing system, it is possible to assist the user to set an appropriate threshold value for identifying a region meeting a class.

[Technology 6]

The information processing system according to Technology 4, further including:

an evaluation screen generation unit,

wherein the determination unit determines that an object captured in each evaluated image is abnormal when an area of the region meeting a class indicated by the synthesized response map is equal to or greater than a predetermined threshold value,

wherein the determination unit determines whether the subject captured in each evaluated image is normal or abnormal multiple times, changing the threshold value,

wherein the evaluation unit evaluates the function approximator multiple times by using results of multiple determinations by the determination unit, and

wherein the evaluation screen generation unit generates an evaluation screen that shows a plurality of threshold values and a plurality of evaluation results in association with each other.

According to this information processing system, it is possible to assist the user to set an appropriate threshold value, related to an area of a region meeting a class, for determining whether an object captured in an evaluated image is normal or abnormal.

[Technology 7]

A computer program including computer-implemented modules including:

a module that receives registration of a plurality of classes each corresponding to a normal attribute or an abnormal attribute;

a module that generates a function approximator by learning based on a plurality of training images each corresponding to one of the plurality of classes;

a module that uses the function approximator to estimate a portion, in each of a plurality of evaluated images registered as capturing a normal subject or an abnormal subject, corresponding to each class;

a module that determines whether a subject in each evaluated image is normal or abnormal based on a result of synthesizing portions in each evaluated image meeting a class corresponding to an abnormal attribute; and
a module that evaluates the function approximator based on whether each evaluated image is registered as capturing a normal subject or capturing an abnormal subject and on a result of determining whether the subject in each evaluated image is normal or abnormal.

According to this computer program, it is possible to implement a process of supporting evaluation of the accuracy of classification by a function approximator in a computer.

INDUSTRIAL APPLICABILITY

The technologies of the present disclosure are applicable to information processing systems and information processing apparatuses.

REFERENCE SIGNS LIST

10 information processing system, 12 AI processing apparatus, 14 user terminal, 30 image registration unit, 32 class registration unit, 34 dataset setting unit, 36 model generation unit, 38 estimation unit, 40 determination unit, 42 evaluation unit, 46 evaluation generation unit, 48 management screen provision unit, 52 evaluated image

**Claims**

1. An information processing system comprising:

    a reception unit that receives registration of a plurality of classes each corresponding to a normal attribute or an abnormal attribute;
    a model generation unit that generates a function approximator by learning based on a plurality of training images each corresponding to one of the plurality of classes;
    an estimation unit that uses the function approximator to estimate a portion, in each of a plurality of evaluated images registered as capturing a normal subject or an abnormal subject, corresponding to each class;
    a determination unit that determines whether a subject in each evaluated image is normal or abnormal based on a result of synthesizing portions in each evaluated image meeting a class corresponding to an abnormal attribute; and
    an evaluation unit that evaluates the function approximator based on whether each evaluated image is registered as capturing a normal subject or capturing an abnormal subject and on a result of determining whether the subject in each evaluated image is normal or abnormal.

2. The information processing system according to claim 1,
    wherein the evaluation unit calculates at least one of an over detection rate or an oversight rate related to the function approximator.

3. The information processing system according to claim 1 or 2, further comprising:
    an evaluation screen generation unit that generates an evaluation screen that shows, in distinction from one other, a first evaluated image which is registered as capturing a normal subject and for which the subject is determined to be normal, a second evaluated image which is registered as capturing a normal subject and for which the subject is determined to be abnormal, a third evaluated image which is registered as capturing an abnormal subject and for which the subject is determined to be abnormal, and a fourth evaluated image which is registered as capturing an abnormal subject and for which the subject is determined to be normal.

4. The information processing system according to claim 1 or 2,

    wherein the estimation unit generates, for each of the plurality of evaluated images, a plurality of response maps indicating a degree of response to each class, and
    wherein the determination unit synthesizes a plurality of response maps related to a class corresponding to an abnormal attribute and determines whether an object captured in each evaluated image is normal or abnormal based on a size of a region meeting a class indicated by a synthesized response map.

5. The information processing system according to claim 4, further comprising:

an evaluation screen generation unit,
wherein the response map includes a value indicating a degree of response to each class for each region in each evaluated image,
wherein the determination unit identifies a region in which the degree of response is equal to or greater than a predetermined threshold value in the response map as a region meeting a class,
wherein the determination unit identifies the region meeting a class in the response map corresponding to each evaluated image multiple times and determines whether the subject captured in each evaluated image is normal or abnormal multiple times, changing the threshold value,
wherein the evaluation unit evaluates the function approximator multiple times by using results of multiple determinations by the determination unit, and
wherein the evaluation screen generation unit generates an evaluation screen that shows a plurality of threshold values and a plurality of evaluation results in association with each other.

6. The information processing system according to claim 4, further comprising:

an evaluation screen generation unit,
wherein the determination unit determines that an object captured in each evaluated image is abnormal when an area of the region meeting a class indicated by the synthesized response map is equal to or greater than a predetermined threshold value,
wherein the determination unit determines whether the subject captured in each evaluated image is normal or abnormal multiple times, changing the threshold value,
wherein the evaluation unit evaluates the function approximator multiple times by using results of multiple determinations by the determination unit, and
wherein the evaluation screen generation unit generates an evaluation screen that shows a plurality of threshold values and a plurality of evaluation results in association with each other.

7. A computer program comprising computer-implemented modules including:

a module that receives registration of a plurality of classes each corresponding to a normal attribute or an abnormal attribute;
a module that generates a function approximator by learning based on a plurality of training images each corresponding to one of the plurality of classes;
a module that uses the function approximator to estimate a portion, in each of a plurality of evaluated images registered as capturing a normal subject or an abnormal subject, corresponding to each class;
a module that determines whether a subject in each evaluated image is normal or abnormal based on a result of synthesizing portions in each evaluated image meeting a class corresponding to an abnormal attribute; and
a module that evaluates the function approximator based on whether each evaluated image is registered as capturing a normal subject or capturing an abnormal subject and on a result of determining whether the subject in each evaluated image is normal or abnormal.

FIG. 1

14a (14)

USER TERMINAL

14b (14)

USER TERMINAL

14c (14)

USER TERMINAL

16

12

AI PROCESSING APPARATUS

INFORMATION PROCESSING SYSTEM 10

FIG. 2

AI PROCESSING APPARATUS 12

COMMUNICATION UNIT 24

PROCESSING UNIT 20

IMAGE REGISTRATION UNIT 30

CLASS REGISTRATION UNIT 32

DATASET SETTING UNIT 34

MODEL GENERATION UNIT 36

ESTIMATION UNIT 38

DETERMINATION UNIT 40

EVALUATION UNIT 42

MANAGEMENT SCREEN PROVISION UNIT 48

MANAGEMENT SCREEN GENERATION UNIT 44

EVALUATION SCREEN GENERATION UNIT 46

STORAGE UNIT 22

DATASET STORAGE UNIT 26

EVALUATION DATA STORAGE UNIT 28

FIG. 3

```
                    START

S10         REGISTER IMAGE

S11         REGISTER CLASS

S12         SET TRAINING DATASET

S13         GENERATE INSPECTION AI

S14         GENERATE RESPONSE MAP
            FOR EACH CLASS

S15         GENERATE NG RESPONSE MAP

S16         BINARIZE NG RESPONSE MAP

S17         FILTER ACCORDING TO AREA

S18         OK DETERMINATION OR NG
            DETERMINATION

S19         CALCULATE EVALUATION
            INDICATOR

S20         GENERATE EVALUATION
            SCREEN

S21         PROVIDE EVALUATION SCREEN

                    END
```

FIG. 4

FIG. 5

54

55

| LEAD DEFECT | DIRT | CASING | BACKGROUND PART |

56

NG CATEGORY

DENT

CANCEL    REGISTER

FIG. 6A

EVALUATED IMAGE
(NG EVALUATED IMAGE)

52

FIG. 6D

CASING
(OK CATEGORY)

58c(58)

FIG. 6B

LEAD DEFECT
(NG CATEGORY)

58a(58)

FIG. 6E

BACKGROUND PART
(OK CATEGORY)

58d(58)

FIG. 6C

DIRT
(NG CATEGORY)

58b(58)

FIG. 6F

LEAD PART
(OK CATEGORY)

58e(58)

EP 4 675 553 A1

FIG. 7

~60

FIG. 8

~62

19

FIG. 9

# FIG. 10

| OK | NG |

| MATCH | MISMATCH(OVER DETECTION) |

NON-DEFECTIVE PRODUCT_EVALU ATION_9.png AREA VALUE:0

NON-DEFECTIVE PRODUCT_EVALU ATION_10.png AREA VALUE:0

NON-DEFECTIVE PRODUCT_EVALU ATION_2.png AREA VALUE:0

# FIG. 11

FIG. 12

## INTERNATIONAL SEARCH REPORT

International application No.

**PCT/JP2024/006563**

| A. | CLASSIFICATION OF SUBJECT MATTER |
|---|---|

*G06T 7/00*(2017.01)i; *G06N 20/00*(2019.01)i
FI:  G06T7/00 350B; G06N20/00 130

According to International Patent Classification (IPC) or to both national classification and IPC

| B. | FIELDS SEARCHED |
|---|---|

Minimum documentation searched (classification system followed by classification symbols)

G06T7/00; G06N20/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2022-061157 A (AZBIL CORP.) 18 April 2022 (2022-04-18)<br>entire text, all drawings | 1-7 |
| A | JP 2021-086381 A (OMRON CORPORATION) 03 June 2021 (2021-06-03)<br>entire text, all drawings | 1-7 |
| A | WO 2021/209867 A1 (SEMICONDUCTOR ENERGY LABORATORY CO., LTD.) 21 October 2021 (2021-10-21)<br>entire text, all drawings | 1-7 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **19 April 2024** | **14 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/006563**

| Patent document cited in search report | | | Publication date (day/month/year) | Patent family member(s) | | | Publication date (day/month/year) |
|---|---|---|---|---|---|---|---|
| JP | 2022-061157 | A | 18 April 2022 | (Family: none) | | | |
| JP | 2021-086381 | A | 03 June 2021 | CN entire text, all drawings | 112862062 | A | |
| WO | 2021/209867 | A1 | 21 October 2021 | US entire text, all drawings | 2023/0351730 | A1 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JONATHAN LONG ; EVAN SHELHAMER ; TREVOR DARRELL**. Fully Convolutional Networks for Semantic Segmentation. *The IEEE Conference on Computer Vision and Pattern Recognition (CVPR)*